# EUROPÄISCHE PATENTSCHRIFT

(11) **EP 2 021 639 B1**
(45) Veröffentlichungstag und Bekanntmachung des Hinweises auf die Patenterteilung: **23.03.2011**
(21) Anmeldenummer: 07725554.5
(22) Anmeldetag: 25.05.2007
(51) Int. Cl.: F16B 25/10

(54) **SELBSTBOHRENDE SCHRAUBE**
SELF-DRILLING SCREW
VIS AUTOPERCEUSE

(30) Priorität: 29.05.2006 DE 102006026176
(43) Veröffentlichungstag der Anmeldung: 11.02.2009
(73) Patentinhaber: Adolf Würth GmbH & Co. KG, 74653 Künzelsau (DE); Würth International AG, 7004 Chur (CH)
(72) Erfinder: WOLPERT, Frank, 74635 Eschental (DE); WANNER, Jürgen, 74638 Waldenburg (DE); WUNDERLICH, Andreas, 74653 Kupferzell (DE)
(74) Vertreter: Patentanwälte Ruff, Wilhelm, Beier, Dauster & Partner
(86) Internationale Anmeldenummer: PCT/EP2007/004658
(87) Internationale Veröffentlichungsnummer: WO 2007/137771

(56) Entgegenhaltungen:
- DE-B- 1 475 043
- US-A- 3 738 218
- US-A- 3 779 664
- US-A- 5 413 444
- US-A- 5 829 935

## Beschreibung

Die Erfindung betrifft eine selbstbohrende Schraube, nach dem Oberbegriff des Anspruchs 1, (US 5 413 444 A).

Schrauben, die zum Einschrauben in Holz oder holzähnliches Material bestimmt sind, sind häufig als selbstbohrende Schrauben ausgebildet, damit der Vorgang des Vorbohrens nicht mehr erforderlich ist. Es gibt hierfür gewalzte Spitzen, bei denen das vordere Ende der Schraube sich also kegelförmig verjüngt, wobei das Schraubengewinde bis in den vorderen Bereich ausgewalzt ist.

Darüber hinaus gibt es selbstbohrende Schraube mit einer kaltverformten Spitze, die ähnlich aufgebaut ist wie das vordere Ende eines Spiralbohrers. Es sind also zwei durch Kaltverformen hergestellte Schneidkanten vorhanden, die beispielsweise einen Spitzenwinkel von 118° aufweisen.

Ebenfalls bekannt sind Holzschrauben, die vor einer Schabekante eine Zentrierspitze aufweisen. Mit diesen Schrauben soll kein Bohrvorgang durchgeführt werden, sondern ein Schabevorgang (DE 50995).

Es hat sich herausgestellt, dass bei sehr harten Hölzern, wie es beispielsweise bei Terrassen verwendet wird, die bisherigen selbstbohrenden Schrauben wegen der Härte des Holzes ein unbefriedigendes Ergebnis bringen.

Der Erfindung liegt die Aufgabe zu Grunde, eine selbstbohrende Schraube zu schaffen, die auch bei sehr hartem Holz ein leichtes und schnelles Eingreifen und damit Einschrauben ermöglicht.

Zur Lösung dieser Aufgabe schlägt die Erfindung eine selbstbohrende Schraube mit den im Anspruch 1 genannten Merkmalen vor. Welterbildungen der Erfindung sind Gegenstand von Unteransprüchen.

Die Schraube weist also eine Schneidspitze auf, die zwei im wesentlichen quer zur Schraubenlängsachse verlaufende Schneidkanten aufweist. Anders ausgedrückt liegt der Spitzenwinkel im Bereich von etwa 180°.

Da die Schneidkanten jetzt keinen echten Spitzenwinkel mehr bilden, ist vorgesehen, dass die Schraubenspitze, also das vordere Ende der Schraube, eine über die Schneidkanten nach vorne vorspringende Zentrierspitze aufweist. Diese Zentrierspitze soll zunächst das seitliche Ausweichen der Schraube bei dem Beginn des Bohrvorgangs verhindern.

In Weiterbildung der Erfindung kann vorgesehen sein, dass die beiden Schneidkanten in der Stirnansicht der Schraube gesehen parallel zueinander verlaufen.

Insbesondere kann vorgesehen sein, dass in der Stirnansicht gesehen die beiden Schneidkanten zueinander versetzt angeordnet sind, und zwar vorzugsweise beide gegenüber einer durch die Zentrierspitze verlaufenden Durchmesserlinie in unterschiedliche Richtungen versetzt.

Es ist aber auch möglich, dass die beiden Schneidkanten in Stirnansicht gesehen auf einer geraden Linie liegen.

Die Zentrierspitze ist pyramidenförmig ausgebildet. Dadurch wirken die Kanten der Pyramidenform beim Herstellen der Vertiefung mit. Insbesondere kann vorgesehen sein, dass die pyramidenförmige Zentrierspitze ein Parallelogramm als Grundfläche aufweist, beispielsweise eine Raute.

Es kann in Weiterbildung vorgesehen sein, dass die Schneidkanten in Verlängerung von Seiten der Grundfläche der Zentrierspitze verlaufen. Es ist aber ebenfalls möglich und liegt im Rahmen der Erfindung, dass die Schneidkanten in Stirnansicht gesehen in Verlängerung von Kanten der pyramidenförmigen Spitze verlaufen.

Insbesondere kann vorgesehen sein, dass die vor den Schneidkanten gebildeten Ausnehmungen sich über etwa zwei Gewindegänge erstrecken.

Es kann vorgesehen sein, dass die Schraubenspitze spanlos kalt geformt ist, und dass das Gewinde anschließend auf den bereits mit der Schraubenspitze und den Schneidkanten versehenen ansonsten noch gewindelosen Schraubenschaft aufgewalzt wird.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht einer Schraube nach der Erfindung;
- Figur 2: in vergrößertem Maßstab eine Ansicht der Schraube von ihrer Spitze her.
- Figur 3: eine Seitenansicht des vorderen Bereichs einer Schraube bei einer geänderten Ausführungsform;
- Figur 4: eine Ansicht der Schraubenspitze aus einer um 90° versetzten Richtung;
- Figur 5: die Stirnansicht der Schraube nach Figur 3 und Figur 4;
- Figur 6: eine Draufsicht auf eine Hälfte einer Backe zum Herstel- len der Schraubenspitze;
- Figur 7: die Stirnansicht der geschlossenen Kneifbacken.

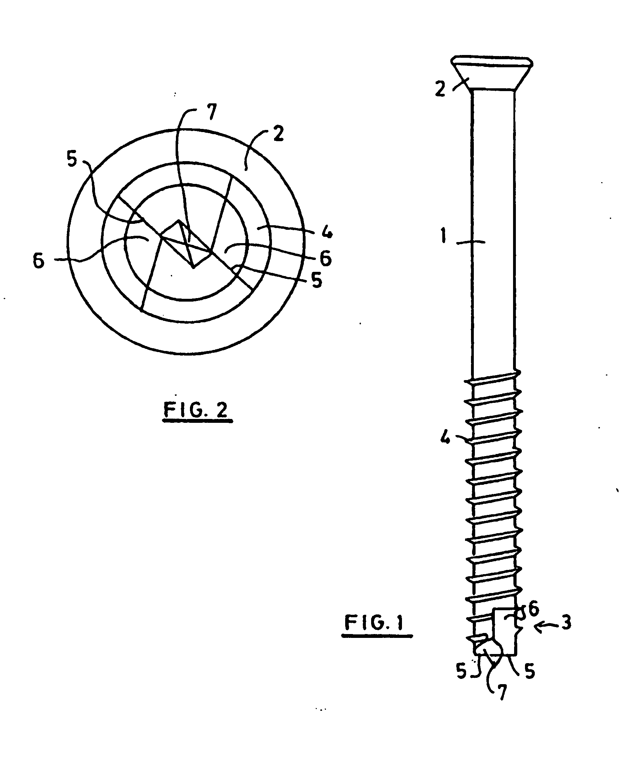

Figur 1 zeigt in einer Seitenansicht eine Schraube, die einen zylindrischen Schraubenschaft 1 aufweist. An dem einen, in Figur 1 oberen Ende, ist an dem Schraubenschaft 1 ein Schraubenkopf 2 ausgebildet, im dargestellten Beispiel ein Senkkopf. Es kann sich selbstverständlich auch um andere Arten von Schraubenköpfen handeln.

An dem dem Schraubenkopf 2 abgewandten vorderen Ende des Schraubenschafts 1 ist eine Schraubenspitze 3 ausgebildet. Von dieser ausgehend erstreckt sich über etwa die Hälfte des Schraubenschafts 1 ein Gewinde 4. Es kann sich um ein symmetrisches oder unsymmetrisches, ein- oder doppelgängiges Gewinde handeln.

Das unmittelbare vordere Ende der Schraubenspitze 3 weist zwei quer zur Längsachse der Schraube verlaufende Schneidkanten 5 auf. In der Seitenansicht der Figur 1 verlaufen die beiden Schneidkanten 5 längs einer Linie, die senkrecht zur Längsachse der Schraube verläuft. In Drehrichtung vor der in Figur 1 rechten Schneidkante 5 ist eine Ausnehmung 6 gebildet, die sich über etwa zwei Gewindegänge in Axialrichtung erstreckt und deren Querabmessung etwa den halben Durchmesser des Schraubenschafts abdeckt. Das Gleiche gilt auch für die in Figur 1 linke Schneidkante 5, wobei diese Ausnehmung auf der Rückseite vorhanden und daher in Figur 1 nicht zu sehen ist.

In der Mitte vor den beiden Schneidkanten 5 ist eine Zentrierspitze 7 ausgebildet, die beim Ansetzen der Schraube auf das Holz oder das holzähnliche Material eine Zentrierung der Schraube bewirkt und verhindert, dass die Schraube beim anschließenden Bohren seitlich wegrutscht.

Nun zu Figur 2, die eine Ansicht der Schraube von ihrer Spitze her in vergrößertem Maßstab zeigt. Die Zentrierspitze 7 weist die Form einer Pyramide mit einer Grundfläche in Form eines Parallelogramms auf. Dieses Parallelogramm hat zwei lange und zwei kurze Seiten. In der Stirnansicht gesehen verlaufen die Schneidkanten 5 in Verlängerung der längeren Seiten der Grundfläche der pyramidenförmigen Zentrierspitze 7. Die beiden Schneidkanten 5 verlaufen in dieser Stirnansicht parallel zueinander und sind beide jeweils um den gleichen Betrag gegenüber einer zwischen ihnen verlaufenden Mittellinie versetzt, die durch die Spitze der Pyramide der Zentrierspitze 7 verläuft.

Es hat sich herausgestellt, dass bei sehr hartem Holz eine solche Ausbildung der Schraubenspitze mit zwei parallel zueinander verlaufenden Schneidkanten 5 ein schnelleres Anbohren des Holzes ermöglicht.

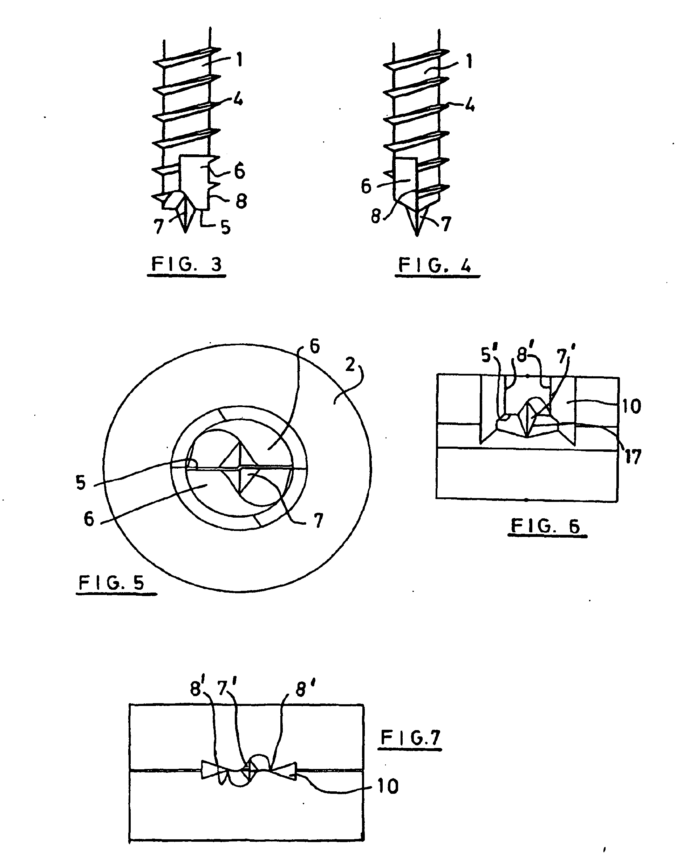

Nun zu der Schraube, wie sie in den Figuren 3 bis 5 dargestellt ist. Im Unterschied zu der vorhergehenden Ausführungsform ist die pyramidenförmigen Schraubenspitze 7 jetzt anders orientiert. Während bei der Ausführungsform nach Figur 1 und 2 die in der Stirnansicht gesehen versetzten Schneidkanten 5 in Verlängerung von Seiten der Grundfläche der Schraubenspitze 7 verlaufen, verlaufen bei der Ausführungsform nach Figur 3 bis 5 die Schneidkanten 5 jetzt in Stirnansicht gesehen in Verlängerung von Kanten der pyramidenförmigen Schraubenspitze 7. Die Schraubenspitze weist wiederum als Grundfläche ein Parallelogramm auf, und zwar in der dargestellten Ausführungsform ein Parallelogramm mit vier gleich langen Seiten, also einen Rhombus. Der Rhombus ist so orientiert, dass seine längere Diagonale senkrecht zu den Schneidkanten 5 verläuft. Auf diese Weise wird erreicht, dass die Länge der Schneidkanten, die ja an der Grundfläche der Zentrierspitze beginnen und bis zum Umfang des Schraubenschafts reichen, größer wird. Dies kann man der Figur 5 besonders gut entnehmen, die eine Stirnansicht einer Schraube zeigt.

Figur 7 zeigt die Stirnansicht einer geschlossenen Kneifbacke zur Herstellung der Schraubenspitze, wobei bei der Herstellung der Schraubenspitze nicht nur die eigentliche Zentrierspitze 7, sondern auch die Ausnehmungen vor den Schneidkanten 5 mit ausgeformt werden. Figur 6 zeigt eine Draufsicht auf eine Hälfte einer solchen Kneifbacke. Man kann hier die der Schraubenspitze komplementäre Innenform besonders deutlich sehen, besondere die Form zur Herstellung der pyramidenförmigen Schraubenspitze 7.

Zur Herstellung der Schraubenspitze an dem noch kein Gewinde aufweisenden Schaft werden die beiden identisch ausgebildeten Kneifbacken geschlossen. Dabei wird das Material des Schafts verformt. Außerhalb der späteren Schneidkanten 5, 8 wird ein so genannter Butzen gebildet, der in den Räumen 10 der Kneifbacken untergebracht ist. Zur Bildung der seitlichen Schneidkanten 8 liegt in der geschlossenen Position der Kneifbacken eine linienförmige Kante 8' auf einer gegenüberliegenden Fläche auf. Das gleiche gilt für die Kanten 5' zur Herstellung der quer verlaufenden Schneidkanten 5.

Zur Bildung der Begrenzungen der pyramidenförmigen Schneidspitze 7 liegen an den entsprechenden Stellen 17 zwei Kanten der Kneifbacken aufeinander.

Nach dem öffnen der Kneifbacken wird jetzt der rings um den vorderen Bereich des Schraubenschafts gebildete Butzen abgebrochen. Dadurch entstehen an dem Schraubenschaft die seitlichen Schneidkanten 8 und die vorderen Schneidkanten 5.

Nach Herstellung der Schneidspitze wird dann anschließend das Gewinde 4 auf den Schraubenschaft 1 aufgewalzt.

## Patentansprüche

1. Selbstbohrende Schraube, mit
1.1 einem Schraubenkopf (2),
1.2 einem Schraubenschaft (1),
1.3 einem Gewinde (4) und
1.4 einer Schraubenspitze (3), die
1.5 zwei Schneidkanten (5) aufweist, die
1.6 im wesentlichen quer zur Schraubenlängsachse verlaufen, wobei
1.7 die Schraubenspitze (3) eine über die Schneidkanten (5) nach vorne vorspringende Zentrierspitze (7) aufweist, **dadurch gekennzeichnet, dass**
die 1.8 Zentrierspitze pyramidenförmig ausgebildet ist.

2. Schraube nach Anspruch 1, bei der die beiden Schneidkanten (5) in Stirnansicht gesehen parallel zueinander verlaufen.

3. Schraube nach einem der vorhergehenden Ansprüche, bei der die beiden Schneidkanten (5) in Stirnansicht gesehen zueinander versetzt angeordnet sind.

4. Schraube nach einem der Ansprüche 1 bis 2, bei der die beiden Schneidkanten (5) auf einer Linie liegen.

5. Schraube nach einem der vorhergehenden Ansprüche, bei der die Zentrierspitze (7) ein Parallelogramm als Grundfläche aufweist.

6. Schraube nach einem der vorhergehenden Ansprüche, bei der die Zentrierspitze (7) einen Rhombus als Grundfläche aufweist.

7. Schraube nach einem der vorhergehenden Ansprüche, bei der die Schneidkanten (5) in Stirnansicht gesehen in Verlängerung von Seiten der Grundfläche der pyramidenförmigen Zentrierspitze (7) verlaufen.

8. Schraube nach einem der Ansprüche 1 bis 6, bei der die Schneidkanten (5) in Stirnansicht gesehen in Verlängerung von Kanten der pyramidenförmigen Zentrierspitze (7) verlaufen.

9. Schraube nach einem der vorhergehenden Ansprüche, bei der die in Drehrichtung vor den Schneidkanten (5) gebildeten Ausnehmungen (6) sich über etwa zwei Gewindegänge erstrecken.

10. Schraube nach einem der vorhergehenden Ansprüche, bei der die Schraubenspitze (3) spanlos kalt geformt ist.

11. Schraube nach einem der vorhergehenden Ansprüche, bei der das Gewinde der Schraube nach dem Herstellen der Schraubenspitze (3) aufgewalzt ist.

## Claims

1. Self-drilling screw, comprising
1.1 a screw head (2),
1.2 a screw shank (1),
1.3 a thread (4), and
1.4 a screw point (3) which
1.5 has two cutting edges which
1.6 run substantially transversely to the screw longitudinal axis, wherein
1.7 the screw point (3) has a locating centre (7) projecting forwards beyond the cutting edges (5), **characterized in that**
1.8 the locating centre is of pyramidal design.

2. Screw according to Claim 1, wherein the two cutting edges (5) run parallel to one another as seen in end view.

3. Screw according to either of the preceding claims, wherein the two cutting edges (5) are arranged offset from one another as seen in end view.

4. Screw according to one of Claims 1 to 2, wherein the two cutting edges (5) lie on a line.

5. Screw according to one of the preceding claims, wherein the locating centre (7) has a parallelogram as base area.

6. Screw according to one of the preceding claims, wherein the locating centre (7) has a rhombus as base area.

7. Screw according to one of the preceding claims, wherein the cutting edges (5), as seen in end view, run in extension of sides of the base area of the pyramidal locating centre (7).

8. Screw according to one of Claims 1 to 6, wherein the cutting edges (5), as seen in end view, run in extension of edges of the pyramidal locating centre (7).

9. Screw according to one of the preceding claims, wherein recesses (6) formed in front of the cutting edges (5) in the direction of rotation extend over about two thread turns.

10. Screw according to one of the preceding claims, wherein the screw point (3) is cold-worked without cutting.

11. Screw according to one of the preceding claims, wherein the thread of the screw is rolled on after the screw point (3) has been produced.

## Revendications

1. Vis autoperceuse, avec
1.1 une tête de vis (2),
1.2 un corps de vis (1),
1.3 un filetage (4) et
1.4 une pointe de vis (3)
1.5 la pointe de vis comportant deux arêtes tranchantes (5), qui
1.6 s'étendant pour l'essentiel transversalement par rapport à l'axe longitudinal de vis,
1.7 la pointe de vis (3) comportant une pointe de centrage (7) saillant vers l'avant au-delà des arêtes tranchantes (5), **caractérisée en ce que**
1.8 la pointe de centrage prend une forme pyramidale.

2. Vis selon la revendication 1, dans laquelle les deux arêtes tranchantes (5) s'étendent parallèlement l'une par rapport à l'autre en vue de face.

3. Vis selon l'une quelconque des revendications précédentes, dans laquelle les deux arêtes tranchantes (5) sont disposées de façon décalée l'une par rapport à l'autre en vue de face.

4. Vis selon l'une quelconque des revendications 1 et 2, dans laquelle les deux arêtes tranchantes (5) sont disposées sur une ligne.

5. Vis selon l'une quelconque des revendications précédentes, dans laquelle la surface de base de la pointe de centrage (7) représente un parallélogramme.

6. Vis selon l'une quelconque des revendications précédentes, dans laquelle la surface de base de la pointe de centrage (7) prend la forme d'un losange.

7. Vis selon l'une quelconque des revendications précédentes, dans laquelle les arêtes tranchantes (5) s'étendent en vue de face dans le prolongement des côtés de la surface de base de la pointe de centrage (7) de forme pyramidale.

8. Vis selon l'une quelconque des revendications 1 à 6, dans laquelle les arêtes tranchantes (5) s'étendent en vue de face dans le prolongement des arêtes de la pointe de centrage (7) de forme pyramidale.

9. Vis selon l'une quelconque des revendications précédentes, dans laquelle les évidements (6) formés avant les arêtes tranchantes (5) dans le sens de rotation s'étendent approximativement au-dessus de deux rainures de filetage.

10. Vis selon l'une quelconque des revendications précédentes, dans laquelle la pointe de vis (3) est formée à froid sans enlèvement de copeaux.

11. Vis selon l'une quelconque des revendications précédentes, dans laquelle le filetage de la vis est laminé après fabrication de la pointe de vis (3).
